# EUROPÄISCHE PATENTSCHRIFT

(11) **EP 0 503 233 B1**
(45) Veröffentlichungstag und Bekanntmachung des Hinweises auf die Patenterteilung: **27.08.1997**
(21) Anmeldenummer: 92100708.4
(22) Anmeldetag: 17.01.1992
(51) Int. Cl.: A01D 34/66, A01B 73/04

(54) **Kreiselmähwerk**
Rotary mower
Faucheuse rotative

(30) Priorität: 04.03.1991 DE 4106811
(43) Veröffentlichungstag der Anmeldung: 16.09.1992
(73) Patentinhaber: CLAAS SAULGAU GMBH, D-88340 Saulgau (DE)
(72) Erfinder: Schulz, Wilfried, W-7968 Saulgau (DE)

(56) Entgegenhaltungen:
- EP-A- 0 358 045
- DE-A- 3 616 403
- DE-A- 3 930 811

## Beschreibung

Die Erfindung bezieht sich auf ein Kreiselmähwerk nach dem Oberbegriff des Anspruches 1.

Eine Maschine dieser Art ist beispielsweise in der DE-AS 24 26 209 beschrieben worden. Solche Maschinen haben oft eine Arbeitsbreite, die größer ist, als die für die Straßenfahrt zulässige Transportbreite. Zur Verringerung der Transportbreite werden deshalb häufig einzelne, Mähkreisel tragende Maschinenteile nach hinten oder - besonders bei vor dem Schlepper angebauten Kreiselmähwerken - nach oben verschwenkt. Eine Verschwenkung nach oben hat die Nachteile, daß die Sicht für den Schlepperfahrer bei der Straßenfahrt empfindlich eingeschränkt wird und daß die, die Messer tragenden Mähteller in eine Lage kommen, die für andere Straßenbenutzer gefährlich werden kann.

Auch aus der DE-OS 39 30 811 ist eine Maschine nach dem Oberbegriff des Patentanspruches 1 bekannt. Bei der hier beispielsweise zu Figur 36 beschriebenen Ausführung nehmen die äußeren Mähkreisel infolge der Ausgestaltung der vorgeschlagenen Ausgleichsvorrichtung für ihre Bodenanpassung bei Verschwenken nach oben aber eine Lage ein, in der eine wesentliche und damit brauchbare Breitenreduzierung des Mähwerkes für dessen Straßentransport nicht erreicht wird.

Die Erfindung bezweckt die Schaffung eines Kreiselmähwerkes, das bei großer Arbeitsbreite für den Straßentransport so verkleinert werden kann, daß die zulässige Transportbreite nicht überschritten wird, ohne daß die oben geschilderten Nachteile in Kauf genommen werden müssen.

Erfindungsgemäß wird das dadurch erreicht, daß bei einem gattungsgemäßen Mähwerk die Hilfsrahmen in einer quer zur Fahrtrichtung verlaufenden Vertikalebene liegen, die in Fahrtrichtung vor einer Vertikalebene durch den Maschinenrahmen liegt.

Weitere für die Ausgestaltung wichtige Einzelheiten sind in den Unteransprüchen 2 bis 4 enthalten.

Die Erfindung wird anhand von 3 Abbildungen beispielsweise erläutert.
- Figur 1: zeigt ein Kreiselmähwerk mit 4 gleich großen Mähkreiseln, von hinten gesehen,
- Figur 3: zeigt ein Kreiselmähwerk mit unterschiedlich grossen Mähkreiseln, von hinten gesehen,
- Figur 4: zeigt den gleichen Gegenstand von oben gesehen.

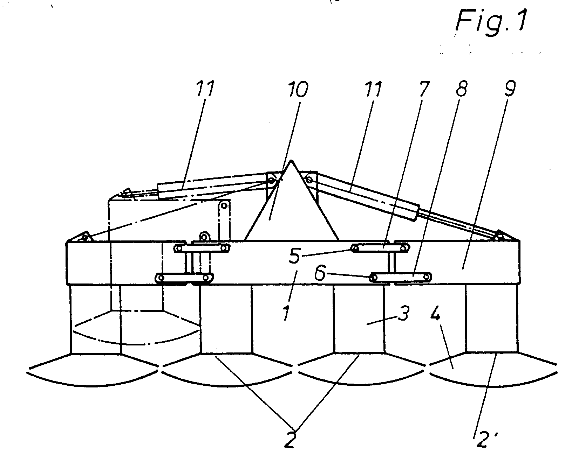

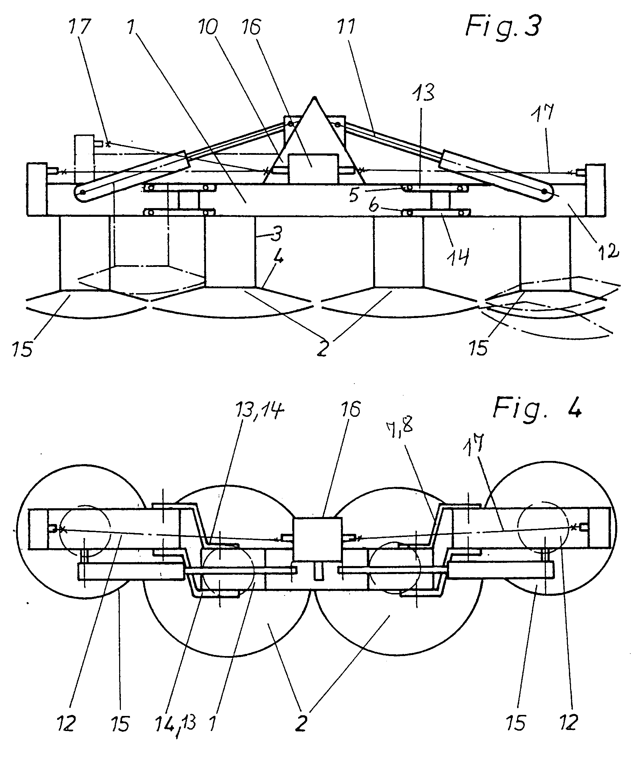

Bei den dargestellten Kreiselmähwerken handelt es sich um solche zum Frontanbau an Schlepper. An einem Maschinenrahmen (1) (Figur 1) sind zwei Mähkreisel (2) angeordnet, die um senkrechte Achsen drehend angetrieben werden. Die Mähkreisel bestehen im wesentlichen aus einem zylinderförmigen Mantel (3) mit verhältnismäßig kleinem Druchmesser und messertragenden Mähtellern (4) mit erheblich größerem Durchmesser. An den äußeren Enden des Maschinenrahmens (1) befinden sich Anlenkpunkte (5, 6), an denen Lenker (7, 8) drehbar gelagert sind. Mit den Lenkern (7, 8) ist je ein Hilfsrahmen (9) gelenkig verbunden. Jeder Hilfsrahmen (9) trägt einen Mähkreisel (2').

Mit dem Maschinenrahmen (1) fest verbunden ist ein Anbaubock (10). An dem Anbaubock (10) sind zwei hydraulische Zylinder (11) angelenkt, die ihrerseits mit dem Hilfsrahmen (9) gelenkig verbunden sind.

Bei dem Kreiselmäher nach Figuren 3 und 4 sind im wesentlichen die gleichen Bauelemente vorhanden. Zwei Hilfsrahmen (12) sind in Fahrtrichtung versetzt zu dem Maschinenrahmen (1) angeordnet. Die Lenker (13, 14) sind gekröpft. Die an den Hilfsrahmen (12) angeordneten Mähkreisel (15) haben einen kleineren Wirkdurchmesser, als die Mähkreisel (2) am Maschinenrahmen (1). In den Figuren 3 und 4 wird auch eine Möglichkeit für den Antrieb der äußeren Mähkreisel (15) angedeutet. Er erfolgt von einem Mittelgetriebe (16) aus über Gelenkwellen (17).

Die Hilfsrahmen (9, 12) können mit dem Maschinenrahmen (1) statt mit Lenkern (7, 8, 13, 14) auch über hier nicht dargestellte Kurvenführungen oder auch über eine Kombination von Lenkern und Kurvenführungen miteinander formschlüssig verbunden sein.

In der Arbeitsstellung liegen die Mähkreisel (2, 2', 15) (Figuren 1 und 3) bei festgestellten hydraulischen Zylindern (11) in einer gemeinsamen Horizontalebene. Die hydraulischen Zylinder (11) können aber auch einen begrenzten Freigang haben, so daß sich die äußeren Mähkreisel (2', 15), wie in Figur 3 (rechts) gezeigt, an Bodenunebenheiten anpassen können.

Zu Erreichung einer günstigen Transportstellung werden die äußeren Mähkreisel (2') (Figur 1) oder (15) (Figur 3) mittels der hydraulischen Zylinder (11) so angehoben, daß sie in eine Lage kommen, wie sie in den Figuren 1 und 3 gestrichelt angedeutet ist. Die äußeren Mähkreisel (2', 15) bewegen sich dabei in Richtung der Maschinenmitte zu und dadurch verringert sich die Transportbreite gegenüber der Arbeitsbreite um einen erheblichen Betrag.

In gleicher Weise könnten die äußeren Mähkreisel (2', 15) für die Transportstellung gegenüber den inneren Mähkreiseln (2) auch abgesenkt werden.

## Patentansprüche

1. Kreiselmähwerk mit mindestens 3, an einem Maschinenrahmen angeordneten Mähkreiseln mit Messer tragenden, umlaufenden Mähtellern und etwa zylinderförmigen Mänteln geringeren Durchmessers, die in der Arbeitsstellung in einer gemeinsamen Horizontalebene umlaufen, wobei die äußeren Mähkreisel (2', 15) an Hilfsrahmen (9, 12) angeordnet sind, die höhen- und querbeweglich mit dem Maschinenrahmen (1) verbunden sind, und die Hilfsrahmen (9, 12) mittels Lenkern (7, 8, 13, 14) höhen- und querverschwenkbar an den Maschinenrahmen (1) angelenkt sind oder mittels Kurvenführungen höhen- und querbewegbar mit dem Maschinenrahmen (1) verbunden sind, dadurch gekennzeichnet, daß die Hilfsrahmen (12) in einer quer zur Fahrtrichtung verlaufenden Vertikalebene liegen, die in Fahrtrichtung vor einer Vertikalebene durch den Maschinenrahmen (1) liegt, und daß die äußeren Mähkreisel (2', 15) zur Erzielung einer verminderten Transportbreite so aus der gemeinsamen Horizontalebene heraus bewegt werden können, daß sie in Richtung auf die inneren Mähkreisel (2) derart verschoben werden können, daß die äußeren oder inneren Mähteller (4) bis nahe an die zylinderförmigen Mäntel (3) der inneren oder äußeren Mähkreisel (2, 15) heranreichen.

2. Kreiselmähwerk nach Anspruch 1, dadurch gekennzeichnet, daß die äußeren Mähkreisel (15) einen kleineren Wirkdurchmesser als die inneren Mähkreisel (2) haben.

3. Kreiselmähwerk nach Anspruch 2, dadurch gekennzeichnet, daß die Hilfsrahmen (9, 12) durch hydraulische Zylinder (11) oder dergleichen relativ zum Maschinenrahmen (1) bewegt werden können.

4. Kreiselmähwerk nach einem der Ansprüche 1 - 3, dadurch gekennzeichnet, daß die Hilfsrahmen (9, 12) zur Verbesserung der Bodenanpassung der Mähkreisel (2, 2', 15) in der Arbeitsstellung relativ zum Maschinenrahmen (1) frei höhenbeweglich sind.

## Claims

1. A rotary mower having at least three mowing rotors arranged on a machine frame with blade-bearing rotating mowing discs and substantially cylindrical casings of smaller diameter which in the working position rotate in a common horizontal plane, wherein the outer mowing rotors (2', 15) are arranged on auxiliary frames (9, 12) which are connected to the machine frame (1) movably in respect of height and transversely and the auxiliary frames (9, 12) are mounted to the machine frame (1) pivotably in respect of height and transversely by means of links (7, 8, 13, 14) or are connected to the machine frame (1) movably in respect of height and transversely by means of cam guides characterised in that the auxiliary frames (12) lie in a vertical plane which extends transversely with respect to the direction of travel and which lies in the direction of travel in front of a vertical plane through the machine frame (1), and that the outer mowing rotors (2', 15), to provide a reduced transport width, can be so moved out of the common horizontal plane that they can be displaced in a direction towards the inner mowing rotors (2) in such a fashion that the outer or inner mowing discs (4) extend to close to the cylindrical casings (3) of the inner or outer mowing rotors (2, 15).

2. A rotary mower according to claim 1 characterised in that the outer mowing rotors (15) are of a smaller operative diameter than the inner mowing rotors (2).

3. A rotary mower according to claim 2 characterised in that the auxiliary frames (9, 12) can be moved relative to the machine frame (1) by hydraulic cylinders (11) or the like.

4. A rotary mower according to one of claims 1 to 3 characterised in that the auxiliary frames (9, 12) are freely movable in respect of height relative to the machine frame to improve adaptation of the mowing rotors (2, 2', 15) to the ground in the working position.

## Revendications

1. Faucheuse rotative comprenant au moins trois organes rotatifs de fauchage agencés sur un châssis de la machine et munis de plateaux rotatifs de fauchage, portant des couteaux, et d'enveloppes sensiblement cylindriques de diamètre plus petit, tournant dans un plan horizontal commun dans la position de travail, les organes rotatifs extérieurs de fauchage (2', 15) étant placés sur des bâtis auxiliaires (9, 12) qui sont reliés au châssis (1) de la machine avec mobilité en hauteur et dans le sens transversal, et les bâtis auxiliaires (9, 12) étant articulés à pivotements verticaux et transversaux sur le châssis (1) de la machine, au moyen de biellettes (7, 8, 13, 14), ou bien étant reliés audit châssis (1) de la machine avec mobilité en hauteur et dans le sens transversal, au moyen de guidages par cames, caractérisée par le fait que les bâtis auxiliaires (12) se trouvent dans un plan vertical s'étendant transversalement par rapport à la direction du déplacement et situé, dans la direction du déplacement, avant un plan vertical passant par le châssis (1) de la machine ; et par le fait que, en vue d'obtenir une largeur de transport réduite, les organes rotatifs extérieurs de fauchage (2', 15) peuvent être sortis du plan horizontal commun de telle sorte qu'ils puissent être animés de coulissements, en direction des organes rotatifs intérieurs de fauchage (2), afin que les plateaux de fauchage (4) extérieurs ou intérieurs se rapprochent des enveloppes cylindriques (3) des organes rotatifs de fauchage (2, 15) intérieurs ou extérieurs.

2. Faucheuse rotative selon la revendication 1, caractérisée par le fait que les organes rotatifs extérieurs de fauchage (15) présentent un plus petit diamètre efficace que les organes rotatifs intérieurs de fauchage (2).

3. Faucheuse rotative selon la revendication 2, caractérisée par le fait que les bâtis auxiliaires (9, 12) peuvent être animés de mouvements, par rapport au châssis (1) de la machine, par l'intermédiaire de vérins hydrauliques (11) ou de systèmes analogues.

4. Faucheuse rotative selon l'une des revendications 1-3, caractérisée par le fait que les bâtis auxiliaires (9, 12) peuvent se déplacer librement en hauteur, par rapport au châssis (1) de la machine, en vue d'améliorer l'adaptation au sol des organes rotatifs de fauchage (2, 2', 15) dans la position de travail.
